# EUROPEAN PATENT SPECIFICATION

(11) **EP 3 793 350 B1**
(45) Date of publication and mention of the grant of the patent: **03.07.2024**
(21) Application number: 19804231.9
(22) Date of filing: 15.05.2019
(51) Int. Cl.: A01K 11/00

(54) **ANIMAL TAG**
TIERMARKE
ÉTIQUETTE POUR ANIMAUX

(30) Priority: 17.05.2018 AU 2018901722
(43) Date of publication of application: 24.03.2021
(73) Proprietor: Ceres Tag Pty Ltd, Brisbane QLD 4059 (AU)
(72) Inventor: SMITH, David Ian, Brisbane, Queensland 4059 (AU)
(74) Representative: Lavoix
(86) International application number: PCT/AU2019/050459
(87) International publication number: WO 2019/218012

(56) References cited:
- WO-A1-99/29167
- WO-A1-2004/036984
- WO-A1-2014/015384
- AU-B2- 2010 227 050
- FR-A1- 2 687 823
- US-A- 4 425 726
- US-A1- 2011 184 256
- US-A1- 2013 247 433

## Description

### TECHNICAL FIELD

This invention relates generally to animal tags, more particularly, to a livestock ear tag assembly.

### BACKGROUND

Any references to methods, apparatus or documents of the prior art are not to be taken as constituting any evidence or admission that they formed, or form part of the common general knowledge.

The use of smart tags for tagging animals is becoming increasingly popular. Smart tags can be used in a variety of applications including tracking of the tagged animals with added functionality such as health and behaviour monitoring. The applicant's previous patent application Australian Patent Application No. 2017239570 provides one such animal tag. One of the factors involved in the design and construction of such animal tags relates to the provision of electronic componentry in a relatively compact configuration that can be readily attached to and removed from an animal.

One type of ear tag currently being used includes a female component and a male component. The male component penetrates the ear of the animal and locks into the female component of the ear tag, to fasten the tag to the ear. The female component includes a boss and a tag member, with both typically being made of a plastic material. The male component is made of a resilient plastic so that when the male component is inserted into the female component it cannot be very easily disengaged. The inclusion of electronic components within the ear tag has given rise to a need to provide an improved tag attachment mechanism such that in a two piece animal tag, both pieces can be connected whilst also retaining both pieces of the animal tag on the animal's ear. In view of the above, it is desirable to provide an improved animal tag which addresses at least some of the problems of the prior art.

FR 2687823 A1 discloses a non-falsifiable identification label for an animal, the label including a main part of which is formed by a lower and upper plate which are linked with an interposition of spacing elements in order to form a housing intended for the electronic circuit, and a first fixing element formed by a passage formed in the main part and passing through the lower plate, two spacing elements clamping an electrical connection washer linked to the electronic circuit, the upper plate, possibly a fastening ring and an upper element.

US 2013/0247433 A1 discloses an auricular livestock identification tag comprising a male portion having a head at an end of a narrower stem, the head protruding laterally from the stem by an abutment ledge, and a female portion having an annular body with an axial aperture, and an insertion side opposite an exposure side, and a plurality of resilient abutment members extend inwardly from the annular body into the axial aperture, the abutment members being flexible to allow penetration of the head through the axial aperture from the insertion side to the exposure side, and resilient so as to return toward its original position, and under the abutment ledge, after said penetration, to thereafter prevent retraction of the head through the axial aperture.

WO 99/29167 A1 discloses an animal ear tag including a coupling means for installing the ear tag with an animal's ear, the coupling means having a stem with a head portion and a female opening through with the head portion can pass to affect a coupling action, the female opening being formed as part of a separate enclosed boss component of hard material which is fastened to material forming a further part of the ear tag.

### SUMMARY OF INVENTION

In one aspect, the invention provides an animal tag for attachment to an ear of an animal, as defined in the appended claims.

### BRIEF DESCRIPTION OF THE DRAWINGS

Preferred features, embodiments and variations of the invention may be discerned from the following Detailed Description which provides sufficient information for those skilled in the art to perform the invention. The Detailed Description is not to be regarded as limiting the scope of the preceding Summary of the Invention in any way. The Detailed Description will make reference to a number of drawings as follows:
Figure 1 is an exploded view of an animal tag 200 in accordance with an illustrative embodiment not in accordance with the appended claims.
Figure 2 is a perspective view of the animal tag 200.
Figure 3 is a sectional view of the animal tag 200.
Figure 4 is an isolated view of the retaining assembly 260.
Figure 5 is a perspective view of a disconnected animal tag 300 in accordance with a second embodiment, this embodiment being according to the invention.
Figure 6 is a perspective view of the first tag member 310 and second tag member 320 of animal tag 300 connected together.
Figure 7 is a cross-sectional rear view of the disconnected animal tag 300 shown in Figure 5.
Figure 8 is a cross-sectional rear view of the connected animal tag 300 shown in Figure 6.
Figure 9 is a cross-sectional front view of the disconnected animal tag 300 shown in Figure 5.
Figure 10 is an exploded view of the animal tag 300.
Figure 11 is an exploded view of the animal tag 300 not showing the solar array, PCB or RFID tag.
Figure 12 is an exploded view of an animal tag 100 in accordance with another illustrative embodiment not in accordance with the appended claims.
Figure 13 is a perspective view of the animal tag 100.
Figure 14 is a sectional view of the animal tag 100.
Figure 15 is an isolated view of the clutch assembly 160 including partial sectional views of the clutch assembly 160 showing the attachment member 150 in a coupled configuration.
Figure 16 is an isolated view of the clutch assembly 160 and the attachment member 150 in an uncoupled configuration.

### DETAILED DESCRIPTION OF PREFERRED EMBODIMENTS

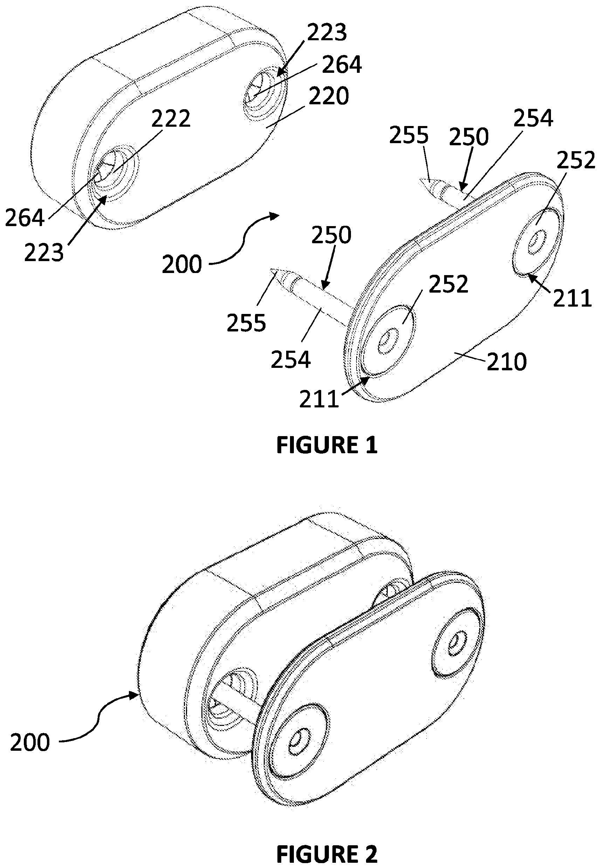

Referring to Figures 1 to 4, a first embodiment of the animal tag 200, not in accordance with the appended claims, is illustrated. The animal tag 200 also comprises a first tag member 210 adapted to be mounted to an inner surface of the animal's ear and a second tag member 220 adapted to be mounted to the outer surface of the animal's ear. A connecting arrangement is provided by an attachment member 250 that is used for interconnecting the first and second tag members 210 and 220. The attachment member 250 includes a head 252 and an elongate shank 254 having a conical end 255 terminating at an apex. During use, the shank 254 is passed through an opening 211 provided on the first tag member 210 and into a bore 222 extending into the second tag member 220 from an opening 223 of the second tag member 220.

The opening 211 on the first tag member 210 is countersunk to allow the head 252 to sit flush with or below an outer surface of the first tag member 210.

The animal tag 200 is also provided with a retaining arrangement 260 for retaining the shank 254 in the second tag member 220. The opening 223 of the second tag member 220 receives the end portion 255 of the shank 254, the opening 223 having a push nut 264 located therein.

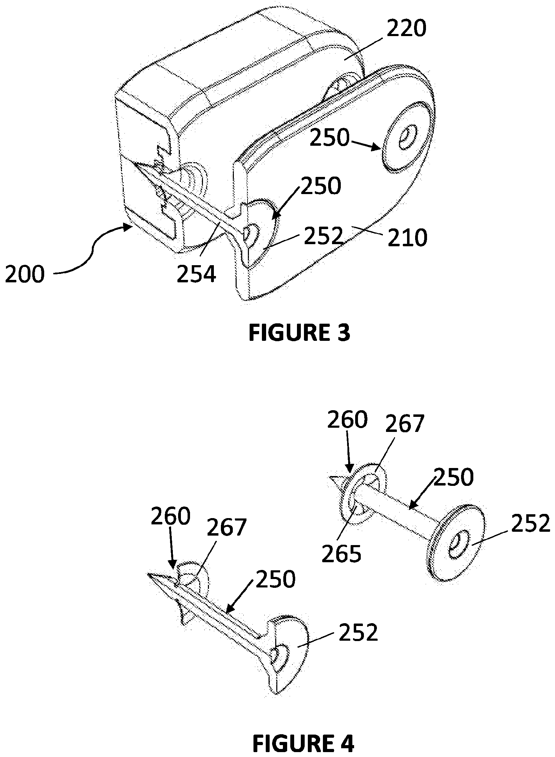

Turning to Figure 4, it can be seen that the push nut 264 is defined by a plurality of movable segment members 265 arranged circumferentially relative to the opening 223. The segment members 265 extend inwardly from a disc shaped member 267. The segment members 265 are movable to increase the overall diameter of the opening such that upon contacting the shank 254, the segment members 265 bend to increase the diameter and allow the insertion of the shank 254 into the opening 223 in a first axial direction. The segment members 265 are also structured to prevent the shank 254 from being withdrawn out of the opening 223 in a second axial direction opposite to the first axial direction. As a result, the segment members 265 of the push nut 264 allow one directional movement of the attachment member 250. More specifically, the push nut 264 allows the shank 254 to be inserted into the bore 222 and opening 223 of the second tag member 220 but prevents the shank 254 from being removed.

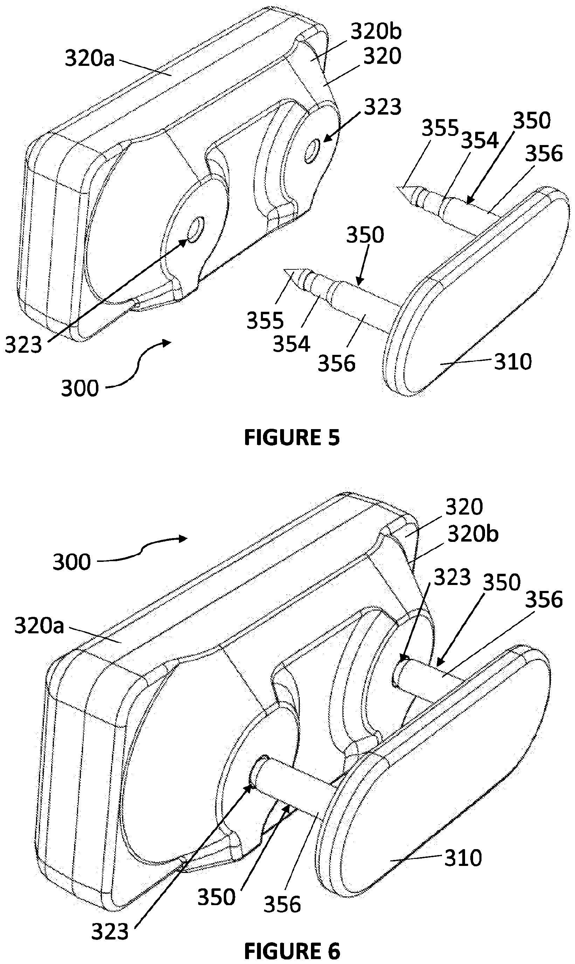

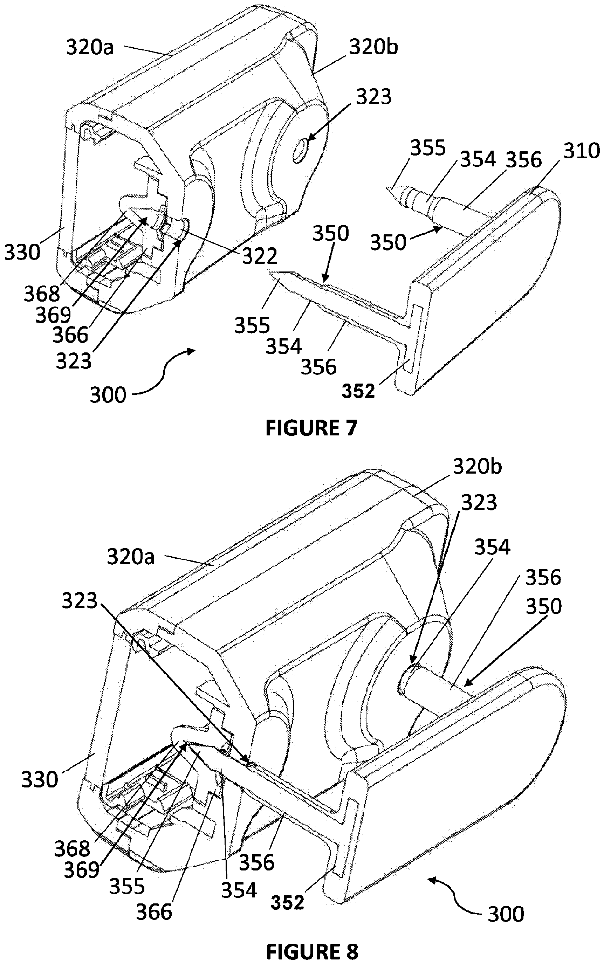

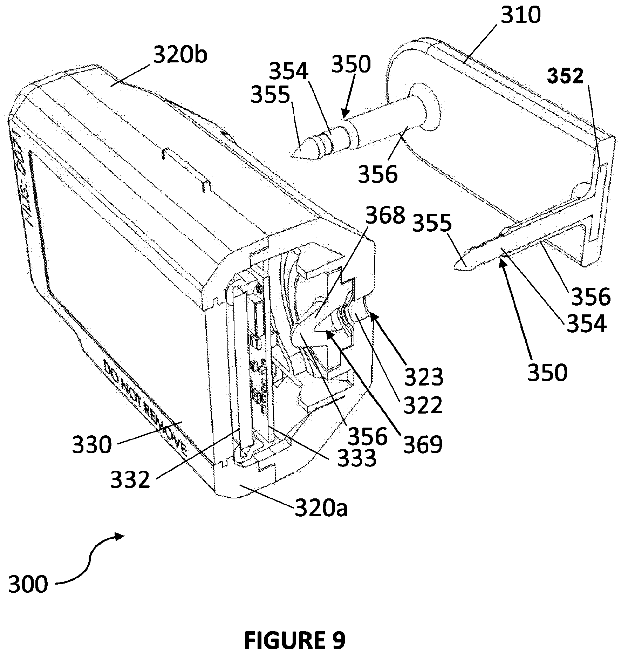

Turning to Figures 5 to 11, a second embodiment of an animal tag 300 for attachment to an ear of an animal (not shown), according to the invention, is illustrated.

Similar to animal tag 200, the animal tag 300 also comprises a first tag member 310 adapted to be mounted to an inner surface of the animal's ear and a second tag member 320 adapted to be mounted to the outer surface of the animal's ear.

Second tag member 320 comprises a main enclosure or housing formed from a front housing 320a and a rear housing 320b. The front housing 320a and rear housing 320b are joined together (for example, by ultrasonic welding) to house a lens 330 for allowing the ingress of light into the interior of the housing and a solar array 332 adjacent the lens 330. The housing also houses a PCB 333, an RFID tag 334, a battery (not shown), a chassis 336 for supporting the solar array 332 and battery, and a retaining arrangement 360 therein. These components will be described in more detail below.

Animal tag 300 also includes a connecting arrangement providing an attachment member 350 that is used for interconnecting the first and second tag members 310 and 320.

The attachment member 350 includes a head 352 and an elongate shank 354 having a conical end 355. During use, the shank 354 extends from the first tag member 310 and into a bore 322 extending into the second tag member 320 from an opening 323 of the second tag member 320.

The head 352 of the attachment member 350 is located within the first tag member 310. This is preferably achieved through an overmoulding process whereby the shank 354 of the attachment member 350 passes through an opening (not shown) in the first tag member 310 and a rear panel is overmoulded onto the attachment member 350.

The animal tag 300 is also provided with a retaining arrangement 360, mentioned above, for retaining the shank 354 in the second tag member 320. The opening 323 of the second tag member 320 receives the end portion 355 of the shank 354, the opening 323 having a push nut 364 located therein.

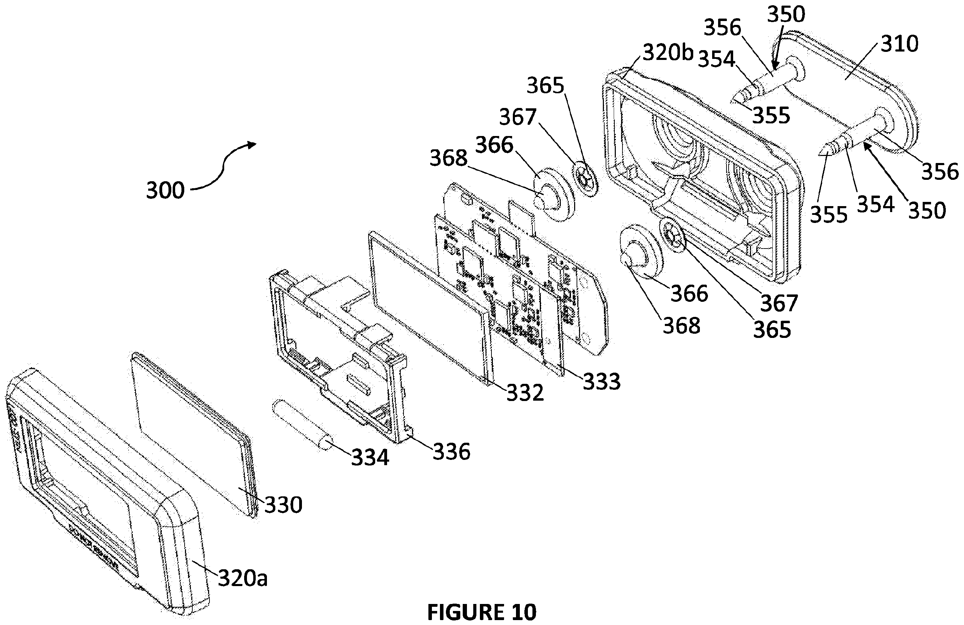

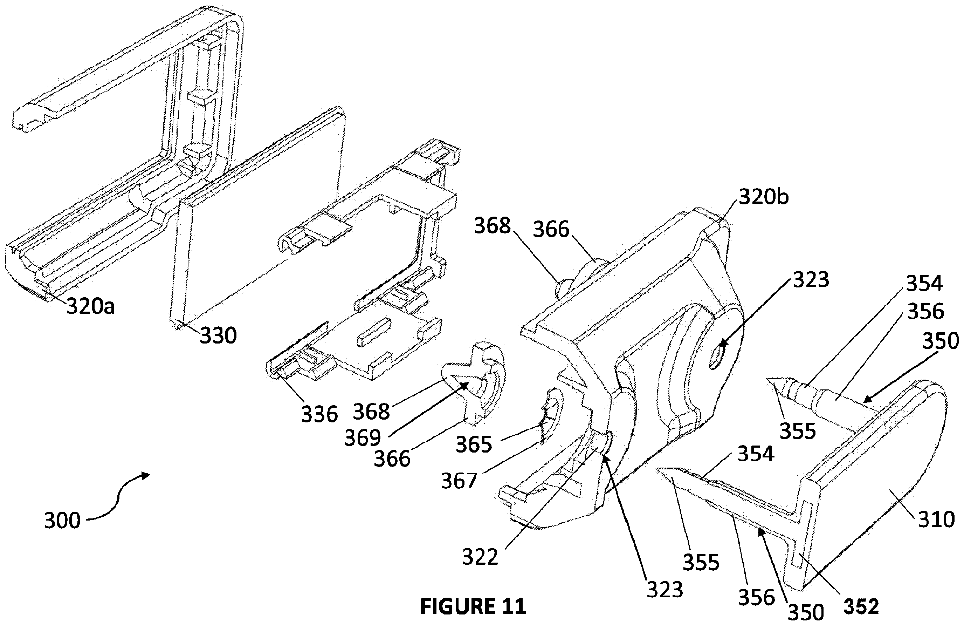

Turning to Figures 10 and 11, it can be seen that the push nut 364 is defined by a plurality of movable segment members 365 arranged circumferentially relative to the opening 323. The segment members 365 extend inwardly from a disc shaped member 367. The segment members 365 are movable to increase the overall diameter of the opening such that upon contacting the shank 354, the segment members 365 bend to increase the diameter and allow the insertion of the shank 354 into the opening 323 in a first axial direction. The segment members 365 are also structured to prevent the shank 354 from being withdrawn out of the opening 323 in a second axial direction opposite to the first axial direction. As a result, the segment members 365 of the push nut 364 allow one directional movement of the attachment member 350. More specifically, the push nut 364 allows the shank 354 to be inserted into the bore 322 and opening 323 of the second tag member 320 but prevents the shank 354 from being removed.

In the illustrated embodiment, the retaining arrangement 360 also includes a retaining plug 366 located within the bore 322 of the second tag member 320. The retaining plug 366 has a receiving portion 368 defining a recess 369 for receiving the end portion of the shank 354. As can be seen, the retaining plug 366 is located adjacent the push nut 364 and is suitably made from a rubber or a soft plastic material. The receiving portion 368 is conical and thus the recess 369 has a shape that is complementary to a shape of the conical end portion 355 of the shank 354. In accordance with the illustrated embodiment, the recess 368 of the retaining plug 366 in Figures 5 to 11 is conical for receiving the conical end portion 355 of the shank 354. The retaining plug 366 limits the movement of the shank 354 once it has been inserted into the bore 322. Advantageously, this limited movement counters the forces imparted on the shank 354 when the animal, such as a cow, for example, shakes or rubs its head on a post to soothe itches and scare away flying insects. These forces, over time, can degrade the integrity of a typical animal tag and eventually lead to the tag breaking off the animal's ear.

In a preferred embodiment, the retaining plug 366 is ultrasonically welded to the rear housing 320b.

The elongate shank 354 is, at least partially, overmoulded with a polymer sleeve 356. In a preferred embodiment, the polymer sleeve 356 comprises a food grade, bio-compatible PET/PBT cover. The polymer sleeve 356 provides a barrier between the shank 354 (which is typically steel) and the animal's ear to prevent irritation to the animal's ear.

The PCB 333, solar array 332 and RFID tag 334 are electrically interconnected and can be programmed in various way and the PCB 333 can have various components. As an example, the PCB 333 may include a position detector in the form of a Global Positioning System ("GPS") receiver for determining position of the animal wearing the tag. The GPS receiver is adapted for polling one or more GPS satellites, in a manner, as will be explained in the subsequent sections. The PCB 333 may also include a stimulator device in the form of a piezoelectric buzzer operable for example at a frequency of 4KHz for selectively applying stimulus to the animal. The stimulus device may include an audible and/or vibrating warning module coupled to electrodes extending from the said device. A warning can be issued when the livestock animal approaches an alert boundary or virtual fence, for 8 example within a distance of 0-10m, depending on allotted boundary distance. The audible and/or vibration warning stimuli is to alert the livestock animal that it is approaching the virtual fence. The livestock animal wearing the electronic tag is able to learn through experiencing alert vibrations and/or sounds and can then avoid future stimuli.

The PCB 333 of the tag member 300 may also include an accelerometer that functions as a three-dimensional ("3D") digital linear acceleration sensor and a 3D digital magnetic sensor. PCB 333 may also include a processor that communicates with the GPS receiver device, stimulator device; RFID tag 334 and a memory unit.

The memory unit may contain processor executable instructions for applying a warning to the animal, with sound and/or vibration, when the animal is within allocated distance from the virtual fence.

The processor may also be associated with a communications device, such as radio frequency transmitter/receiver with an integrated RF antenna (not shown) which allows data transmission between the device directly to satellite, or via a terrestrial network to a base station according to a Low Power Wide Area Network (LPWAN) specification. The LPWAN is particularly suitable for wireless battery operated or powered devices such as the animal tracking device in regional networks. The LPWAN allows secure bi-directional wireless communication between a remote base station and the devices worn by animals in a given geographical area or "virtual field". In an alternative embodiment, a networking chip providing a transceiver for direct satellite communications may be employed for communications purposes.

The LPWAN network architecture used for implementing a system is typically laid out in a star-of-stars topology. In this topology a gateway, such as a base station, forms a transparent bridge relaying messages between a plurality of animal tracking devices and a central network server in the backend. In the case of the gateways, base stations may be connected to a network server via standard IP addressed connections, while the animal tracking devices may use single-hop wireless communication by utilising low radio frequencies to one or many gateways or base stations positioned within a regional area such as a livestock station. The network server can include a user interface allowing a user to pre-program the boundaries of animal use or exclusion areas, for example by entering map coordinates of virtual fence lines.

Communication between the animal tracking devices and gateways or base stations is expected to spread out on different frequency channels and data rates. In some preferred embodiments, the antenna associated with the communications device is suitable for use in a frequency range of 400-2400 Mhz.

The battery is preferably a long life, rechargeable battery that is recharged by the solar array when it is exposed to sunlight through the lens on the outside of the rear housing. External power jacks may also be added to facilitate fast recharging of the battery.

During use, battery voltage and current readings may be monitored by a processor of the PCB 333 and communicated to the user. Suitably the circuitry is provided with a "sleep" mode - such as when the animal is inactive - to reduce power consumption, whereby the apparatus can be "woken" by animal movement.

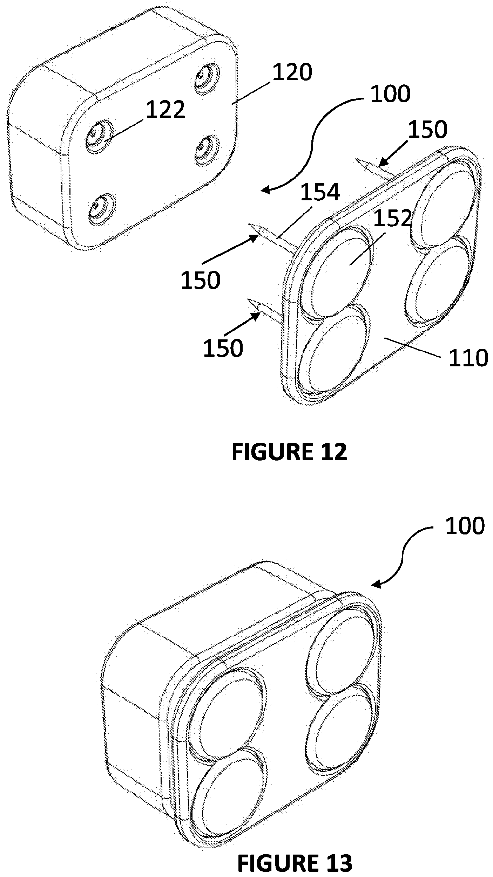

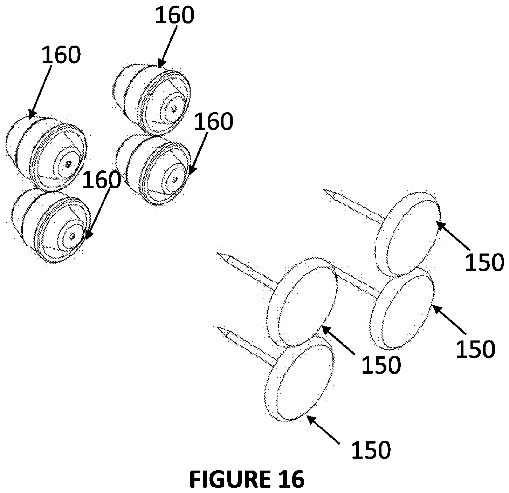

Referring to Figures 12 to 16, a further embodiment of an animal tag 100 for attachment to an ear of an animal (not shown), not in accordance with the appended claims, is illustrated. The tag 100 includes a first tag member 110 adapted to be mounted to an inner surface of the animal's ear and a second tag member 120 adapted to be mounted to the outer surface of the animal's ear. A connecting arrangement is provided by an attachment member 150 that is used for interconnecting the first and second tag members 110 and 120. The attachment member 150 includes a head 152 and an elongate shank 154. During use, the shank 154 passed through an opening provided on the first tag member 110 and into a bore 122 extending into the second tag member 120. The opening on the first tag member 110 is countersunk to allow the head sit flush with or below an outer surface of the first tag member 110.

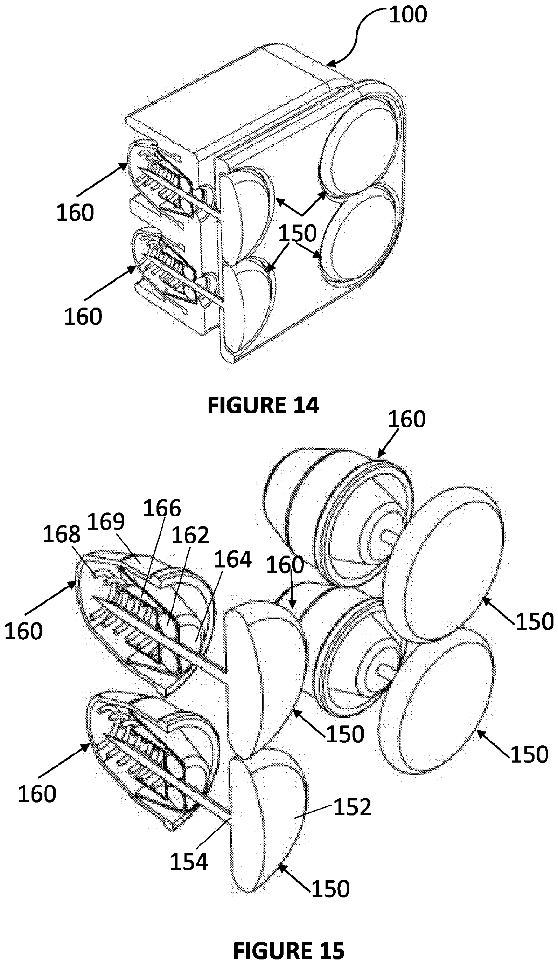

The second tag member 120 includes a retaining arrangement to releasably retain the end portion of the shank 154 within the second tag member 120. The retaining arrangement includes a clutch assembly 160 for retaining the end portion of the shank 154. Turning to Figures 14 and 15, the clutch assembly 160 includes three spherical bodies 162 that are positioned to engage the end portion 154 of the shaft 154 as the shaft 154 is inserted into the bore of the second tag member. The clutch assembly 160 is structured to allow the insertion of the shaft 154 into the bore that results in the spherical bodies 162 in becoming circumferentially arranged relative to the inserted shaft 154. The spherical bodies 162 are housed within a frusto-conical hollow housing 164. The housing 164 includes a small opening at the convergent end of the housing 164 that is sized for receiving the end portion of the shank to allow at least a part of the shank 154 to be inserted into an internal space defined by the housing 164. A biased urging member 166 is positioned in the housing 164 for urging the spherical bodies 162 towards the convergent end of the housing 164 in a retaining configuration whereby upon insertion of the shank 154 into the opening of the housing 164 (at the convergent end), the spherical bodies 162 are engaged by the inserted portion of the shank 154 to become circumferentially positioned relative to the shank 154 and become wedged in between the urging member 166 and inner walls of the convergent end of the housing 164 to retain the shank 154 and prevent withdrawal of the shank 152 from the bore of the second member 120. The urging member 166 is biased by a spring 168 located in the housing 164 to push the urging member 166 in a direction towards the convergent end of the housing 162. In a neutral configuration, the spring 168 remains in the extended position thereby pushing the urging member 166 and the spherical bodies 162 into the convergent end of the housing 164. As a result of the aforementioned arrangement of the clutch assembly 160, as the shank 154 is inserted into the bore, the tip portion of the shank 154 extends into the convergent end of the housing 164 through the hole and pushes against the spherical bodies 162 to arrange the bodies 162 around the shank 154. The biased urging member 166 continues to remain urged thereby applying a pushing force towards the convergent end of the housing 166. In order to make the clutching of the shaft even more effective, notches may be provided to increase the surface area of engagement between the spherical bodies 162 and the shaft 154. The clutch assembly 160 may be housed in an outer housing 169 that encloses and retains the frusto-conical housing member 164, the spherical bodies 162, the urging member 166 and the spring 168.

In this embodiment, the urging member 166 is made from ferromagnetic material that can be attracted by a magnetic force. The first and second tag members 110 and 120 for the animal tag 100 may be readily uncoupled by use of a magnetic detachment device. The magnetic detachment device is facilitated by using a magnet for attracting the urging member 166 and the spherical bodies 162. During an uncoupling operation, a user of the detachment device may position the tag, particularly the second tag member 120 adjacent the magnetic detachment device such that the magnet in the detachment device would exert a magnetic force which will act upon the urging member 166 and the spherical bodies 1621 and draw it closer to the magnet. This magnetic force will need to be sufficiently large to cause the spring 168 to compress as the magnetic force overcomes the biasing force of spring 168. Upon compression of the spring 168, the urging member 166 will be raised from the housing 164 such that spherical bodies 162 are moved away from the convergent end of the housing and into an internal volume of the housing 164 with a larger diameter. As a result, the spherical bodies 162 will separate and release the shank 154 thereby allowing the attachment member 150 to be uncoupled from the second tag member 120.

In this embodiment, four identical attachment members 150 are used for securing the first and second tag members 110 and 120. Each of the first and second tag members 110 and 120 has a substantially oblong or rectangular cross section. The four attachment members 150 are positioned at four corners of the first and second tag members 110 and 120 for inter-connecting the first and second tag members 110 and 120. It is important to note that the invention is in no way limited to using four of the attachment members 150 and in other alternative embodiments one or more of attachment members such as the aforementioned attachment member 150 may be used for coupling the first and second tag members 110 and 120 without departing from the spirit and scope of the invention.

In compliance with the statute, the invention has been described in language more or less specific to structural or methodical features. The term "comprises" and its variations, such as "comprising" and "comprised of" is used throughout in an inclusive sense and not to the exclusion of any additional features.

It is to be understood that the invention is not limited to specific features shown or described since the means herein described comprises preferred forms of putting the invention into effect.

The invention is, therefore, claimed in any of its forms or modifications within the proper scope of the appended claims appropriately interpreted by those skilled in the art.

## Claims

1. An animal tag (300) for attachment to an ear of an animal, the tag comprising:
a first tag member (310) adapted to be mounted to any one of an outer surface or an inner surface of the animal's ear;
a second tag member (320) adapted to be mounted to the other of the outer or inner surface of the animal's ear;
a connecting arrangement for inter-connecting the first and second tag member, the connecting arrangement comprising an attachment member (350) having a head portion (352) adapted to be retained in the first tag member (310) and a solid shank portion (354) adapted to be retained in the second tag member (320),
wherein the second tag member (320) comprises a housing (320a, 320b) having a retaining arrangement (360) therein to retain an end portion (355) of the shank portion (354) of the attachment member (350) therein, the retaining arrangement (360) comprising a push nut (364) located in an opening ( 323) of the housing of the second tag member for receiving the end portion (355) of the shank portion (354), the push nut (364) comprising a circular disk portion (367) and a plurality of inwardly extending movable segment members (365) arranged circumferentially about the circular disk portion (367) whereby the segment members (365) are movable to allow the insertion of the shank (354) into the opening (323) in a first axial direction and wherein the movable members (365) prevent the shank (354) from being withdrawn out of the opening (323) in a second axial direction,
wherein the retaining arrangement (360) further comprises a retaining plug (366) located within the opening (323) of the second tag member, the retaining plug (366) comprising a receiving portion (368) defining a recess (369), wherein the recess (369) is sized and shaped complementarily to the end portion (355) of the shank portion (354) to receive the end portion of the shank portion (354).

2. An animal tag (300) in accordance with claim 1 wherein the head portion (352) of the attachment member (350) is adapted to be retained in an opening of the first tag member.

3. An animal tag (300) in accordance with claim 1 or claim 2 wherein the end portion (355) of the shank portion (354) and the receiving portion (368) of the retaining plug (366) are conical.

4. An animal tag (300) in accordance with any one of the preceding claims wherein at least a portion of the shank portion (354) is covered by a polymer sleeve (356) to provide a barrier between the shank portion (354) and an animal's ear.

## Patentansprüche

1. Tiermarke (300) zum Anbringen an einem Ohr eines Tiers, die Marke umfassend:
ein erstes Markenelement (310), das angepasst ist, um an einer beliebigen von einer Außenfläche oder einer Innenfläche des Ohrs des Tiers montiert zu werden;
ein zweites Markenelement (320), das angepasst ist, um an einer anderen von einer Außen- oder Innenfläche des Ohrs des Tiers montiert zu werden;
eine Verbindungsanordnung zum Verbinden des ersten und des zweiten Markenelements untereinander, die Verbindungsanordnung umfassend ein Anbringungselement (350), das einen Kopfabschnitt (352), der angepasst ist, um in dem ersten Markenelement (310) gehalten zu werden, und einen massiven Schaftabschnitt (354), der angepasst ist, um in dem zweiten Markenelement (320) gehalten zu werden, aufweist,
wobei das zweite Markenelement (320) ein
Gehäuse (320a, 320b) umfasst, das
eine Halteanordnung (360) darin aufweist, um einen Endabschnitt (355) des Schaftabschnitts (354) des Anbringungselements (350) darin zu halten, die Halteanordnung (360) umfassend eine Druckmutter (364),
die sich in einer Öffnung (323) des Gehäuses des zweiten
Markenelements zum Aufnehmen des Endabschnitts (355) des Schaftabschnitts (354) befindet, die Druckmutter (364) umfassend einen kreisförmigen Scheibenabschnitt (367) und eine Vielzahl von sich nach innen erstreckenden beweglichen Segmentelementen (365), die in Umfangsrichtung um den kreisförmigen Scheibenabschnitt (367) angeordnet sind, wodurch die Segmentelemente (365) beweglich sind, um das Einführen des Schafts (354) in die Öffnung (323) in einer ersten axialen Richtung zu ermöglichen, und wobei die beweglichen Elemente (365) verhindern, dass der Schaft (354) in einer zweiten axialen Richtung aus der Öffnung (323) herausgezogen wird,
wobei die Halteanordnung (360) ferner einen Haltestopfen (366) umfasst, der in der Öffnung (323) des zweiten Markenelements angeordnet ist, der Haltestopfen (366) umfassend einen Aufnahmeabschnitt (368), der eine Aussparung (369) definiert, wobei die Aussparung (369) komplementär zu dem Endabschnitt (355) des Schaftabschnitts (354) bemessen und geformt ist, um den Endabschnitt des Schaftabschnitts (354) aufzunehmen.

2. Tiermarke (300) nach Anspruch 1, wobei der Kopfabschnitt (352) des Anbringungselements (350) angepasst ist, um in einer Öffnung des ersten Markenelements gehalten zu werden.

3. Tiermarke (300) nach Anspruch 1 oder Anspruch 2, wobei der Endabschnitt (355) des Schaftabschnitts (354) und der Aufnahmeabschnitt (368) des Haltestopfens (366) konisch sind.

4. Tiermarke (300) nach einem der vorherigen Ansprüche, wobei mindestens ein Abschnitt des Schaftabschnitts (354) von einer Polymerhülse (356) bedeckt ist, um eine Barriere zwischen dem Schaftabschnitt (354) und dem Ohr eines Tiers bereitzustellen.

## Revendications

1. Etiquette pour animaux (300) destinée à être fixée à l'oreille d'un animal, l'étiquette comprenant :
un premier élément d'étiquette (310) adapté pour être monté sur l'une quelconque d'une surface externe ou interne de l'oreille de l'animal ;
un second élément d'étiquette (320) adapté pour être monté sur l'autre de la surface externe ou interne de l'oreille de l'animal ;
un agencement de connexion destiné à interconnecter le premier et le second élément d'étiquette, l'agencement de connexion comprenant un élément de fixation (350) ayant une partie tête (352) adaptée pour être retenue dans le premier élément d'étiquette (310) et une partie tige pleine (354) adaptée pour être retenue dans le second élément d'étiquette (320),
dans laquelle le second élément d'étiquette (320) comprend un
boîtier (320a, 320b) comportant un
un agencement de retenue (360) dans celui-ci pour retenir une partie d'extrémité (355) de la partie tige (354) de l'élément de fixation (350) dans celui-ci, l'agencement de retenue (360) comprenant un écrou à frapper (364)
situé dans une ouverture (323) du boîtier du second élément
d'étiquette pour recevoir la partie d'extrémité (355) de la partie tige (354), l'écrou à frapper (364) comprenant une partie de disque circulaire (367) et une pluralité d'éléments de segment mobiles (365) s'étendant vers l'intérieur et agencés circonférentiellement autour de la partie de disque circulaire (367), les éléments de segment (365) étant mobiles pour permettre l'insertion de la tige (354) dans l'ouverture (323) dans une première direction axiale et dans laquelle les éléments mobiles (365) empêchent la tige (354) d'être retirée de l'ouverture (323) dans une seconde direction axiale,
dans laquelle l'agencement de retenue (360) comprend en outre un bouchon de retenue (366) situé dans l'ouverture (323) du second élément d'étiquette, le bouchon de retenue (366) comprenant une partie de réception (368) définissant un évidement (369), dans lequel l'évidement (369) est dimensionné et formé de manière complémentaire à la partie d'extrémité (355) de la partie tige (354) pour recevoir la partie d'extrémité de la partie tige (354).

2. Étiquette pour animaux (300) selon la revendication 1, dans laquelle la partie tête (352) de l'élément de fixation (350) est adaptée pour être retenue dans une ouverture du premier élément d'étiquette.

3. Étiquette pour animaux (300) selon la revendication 1 ou la revendication 2, dans laquelle la partie d'extrémité (355) de la partie tige (354) et la partie de réception (368) du bouchon de retenue (366) sont coniques.

4. Etiquette pour animaux (300) selon l'une quelconque des revendications précédentes, dans laquelle au moins une partie de la partie tige (354) est recouverte d'un manchon en polymère (356) pour constituer une barrière entre la partie tige (354) et l'oreille de l'animal.
